**Europäisches Patentamt**

**European Patent Office**

**Office européen des brevets**

(11) Numéro de publication : **0 070 785**
**B1**

# (12) FASCICULE DE BREVET EUROPÉEN

(45) Date de publication du fascicule du brevet :
20.02.85

(21) Numéro de dépôt : **82401369.2**

(22) Date de dépôt : **22.07.82**

(51) Int. Cl.⁴ : **H 02 P   7/28**

(54) **Dispositif d'alimentation d'un moteur à courant continu à excitation série pilote par un hacheur à conduction continue contrôlée.**

(30) Priorité : **22.07.81 FR 8114254**

(43) Date de publication de la demande :
**26.01.83 Bulletin 83/04**

(45) Mention de la délivrance du brevet :
**20.02.85 Bulletin 85/08**

(84) Etats contractants désignés :
**BE CH DE IT LI**

(56) Documents cités :
**DE-A- 2 100 087**
**GB-A- 1 578 092**
**US-A- 4 019 108**

(73) Titulaire : **CEM COMPAGNIE ELECTRO-MECANIQUE
& Cie Société en Nom Collectif
37, rue du Rocher
F-75383 Paris Cedex 08 (FR)**

(72) Inventeur : **N'Guyen Uyen, Thuy
34, Rue du Bret Villefontaine
F-38290 La Verpilliere Cedex 222 (FR)**

(74) Mandataire : **Laget, Jean-Loup et al
Cabinet Pierre Loyer 18, Rue de Mogador
F-75009 Paris (FR)**

Jouve, 18, rue St-Denis, 75001 Paris, France

## Description

L'invention concerne un dispositif d'alimentation d'un moteur à courant continu à excitation série piloté par un hacheur à conduction continue contrôlée et plus précisément dans lequel le hacheur commande un système de shuntage à thyristor branché sur l'inducteur.

Il est connu d'utiliser un thyristor associé à un hacheur pour régler progressivement le taux de shuntage de l'inducteur d'un moteur à courant continu de type série. Ce système permet d'éviter l'emploi d'un circuit de commutation forcé pour éteindre le thyristor de shuntage.

Toutefois, ce système ne peut fonctionner correctement qu'avec un travail cyclique du hacheur. En effet, si le hacheur passe en conduction continue, le thyristor ne peut plus alors assurer le réglage du taux de shuntage.

Or précisément, pour certaines applications, il est avantageux de pouvoir utiliser le hacheur en conduction continue.

C'est pourquoi, il a été imaginé de réaliser l'inducteur avec deux enroulements en série (ou un enroulement avec prise intermédiaire) dont le premier peut être progressivement shunté pendant la phase de démarrage, le second enroulement étant destiné à assurer le flux minimum restant lorsque le hacheur est forcé à la conduction continue.

Toutefois, cette disposition présente le grave inconvénient de nécessiter deux inducteurs séparés, ce qui entraîne une augmentation du coût de fabrication et une complexité accrue du câblage.

Il a aussi été imaginé avec un moteur muni d'un seul enroulement inducteur série, d'adjoindre au hacheur un moyen indépendant de shuntage de l'inducteur. Ce moyen est par exemple constitué par un autre hacheur indépendant ou par un dispositif de shuntage électro-mécanique muni de contacteurs et de résistances de shuntage.

L'inconvénient d'un système du type précédemment mentionné provient évidemment de l'adjonction du moyen indépendant de shuntage d'inducteur qui cause une augmentation du coût, des pertes et de la complexité.

C'est pourquoi, l'invention propose un dispositif qui évite les inconvénients mentionnés ci-avant et apporte notamment les avantages suivants :

— moteur muni d'un seul inducteur série,

— hacheur de pilotage unique, avec passage possible en conduction continue contrôlée après la phase de démarrage,

— système de shuntage progressif de l'inducteur, lié au hacheur de pilotage avec passage en conduction continue contrôlée après la phase de démarrage.

Pour atteindre ces buts, l'invention propose un dispositif d'alimentation d'un moteur à courant continu et excitation série dont l'inducteur est muni d'un système de shuntage comportant, une première voie de shuntage contrôlée par un thyristor commandé par un hacheur pour assurer le shuntage variable de l'inducteur pendant les phases de fonctionnement cyclique du hacheur, et muni éventuellement d'un shuntage résistif permanent, caractérisé en ce qu'il comporte une deuxième voie de shuntage contrôlée par thyristor assurant un taux maximal de shuntage lorsque le hacheur passe à l'état de conduction continue, les deux voies de shuntage contrôlées assurant le passage du courant dans le même sens que dans l'inducteur.

Selon un premier mode de réalisation, le système de shuntage comporte un thyristor en parallèle sur l'inducteur et qui constitue la première voie de shuntage et un autre thyristor muni d'une résistance en série qui sont montés en parallèle sur le thyristor de la première voie et qui constituent la deuxième voie de shuntage de telle sorte que l'ouverture d'une voie et la fermeture de l'autre sont obtenues respectivement par l'amorçage et le blocage des thyristors correspondants.

Selon un second mode de réalisation, le système de shuntage comporte deux thyristors en série montés en parallèle sur l'inducteur et une résistance disposée en parallèle sur le thyristor aval, la première voie de shuntage étant constituée par le circuit des deux thyristors et la deuxième voie par le thyristor amont et la résistance parallèle de telle sorte que l'ouverture des voies est respectivement obtenue pour la première par le déblocage des deux thyristors et pour la deuxième par le blocage du thyristor aval et le déblocage du thyristor amont.

Avantageusement, pour ces deux modes de réalisation, le thyristor de la première voie peut être muni d'une résistance d'ajustage branchée en série avec lui.

Selon une variante des modes de réalisation mentionnés ci-avant, le système de shuntage comporte une troisième voie supplémentaire de shuntage de manière à permettre un shuntage de l'inducteur pendant les phases de non-conduction du hacheur en fonctionnement cyclique.

Il est clair que le dispositif selon l'invention peut être utilisé pour de nombreuses applications, notamment dans le domaine de la traction électrique et plus particulièrement encore dans un système de traction-freinage électrique par récupération.

L'invention sera mieux comprise et d'autres particularités apparaîtront à la lecture de la description qui va suivre et qui se réfère au dessin annexé dans lequel :

La figure 1 montre un premier mode de réalisation d'un dispositif selon l'invention,

La figure 2 montre un second mode de réalisation selon l'invention,

La figure 3 est une variante des modes de réalisation précédents,

La figure 4 montre une autre variante possible,

Les figures 5 à 7 montrent à titre d'exemples des modifications possibles des modes de réalisation précédents par changement dans le circuit des emplacements du hacheur et du système de shuntage,

La figure 8 illustre schématiquement une application du dispositif selon l'invention dans un système de traction-freinage électrique par récupération.

Dans les dessins, les éléments identiques ou similaires portent les mêmes références d'une figure à l'autre.

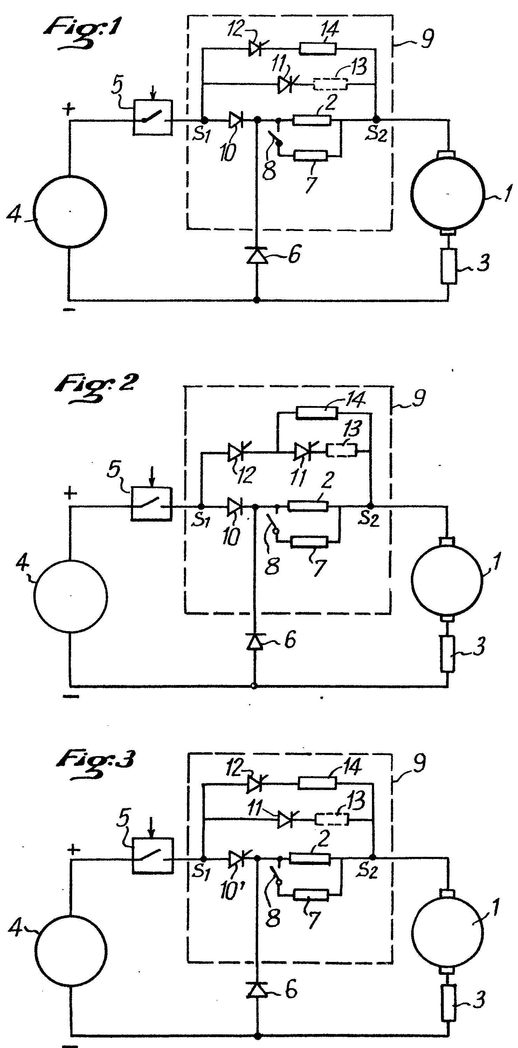

La figure 1 montre l'induit 1 d'un moteur, en série avec un inducteur 2 et une self de lissage 3 qui sont alimentés par une source de courant continu 4 par l'intermédiaire d'un hacheur statique 5 et d'une diode 6 de roue libre. Une résistance 7 de shuntage en série avec un interrupteur 8 (éventuel) sont montés en parallèle sur l'inducteur 2 de manière à réduire au mieux une ondulation du courant dans l'inducteur.

La self de lissage 3 qui est branchée en série avec l'induit 1 est prévue dans le cas où l'enroulement de l'induit 1 ne présente pas assez de self et sa présence est donc facultative.

L'inducteur 2 est muni d'un système de shuntage 9 qui comporte, outre la résistance classique 7 dont il vient d'être question, une diode 10, deux thyristors 11 et 12 et deux résistances 13 et 14. La diode 10 est une diode d'aiguillage qui est disposée en série entre la sortie S1 du hacheur 5 et l'entrée de l'inducteur 2 qui est elle-même reliée en outre à la cathode de la diode 6 de roue libre.

Le thyristor 11 en série avec la résistance d'ajustage 13 qui est facultative sont branchés entre la sortie S1 du hacheur et la sortie S2 de l'inducteur 2 de manière telle que le courant puisse circuler de S1 vers S2.

Le thyristor 12 de shuntage « permanent » en série avec la résistance 14 sont branchés entre les poins S1 et S2 et de manière telle que le courant ne puisse circuler que de S1 vers S2.

Le thyristor 11 et sa résistance facultative 13 forment une première voie de shuntage et le thyristor 12 en série avec sa résistance 14 forment une deuxième voie.

Le fonctionnement du dispositif est en effet le suivant :

Pendant la phase de démarrage qui s'effectue à couple constant, et en agissant sur le rapport cyclique d'ouverture du hacheur 5, on injecte un courant constant en valeur moyenne dans l'inducteur 2 et l'induit 1 du moteur. Pendant ce temps, le système de shuntage est mis hors service en bloquant la conduction des thyristors 11 et 12.

Pendant la phase suivante de travail à puissance constante, le hacheur 5 présente un rapport d'ouverture maximal. Le thyristor 11 est progressivement débloqué de manière à réduire le courant moyen qui circule dans l'inducteur 2 tout en conservant un courant moyen constant dans l'induit 1. Il est clair dans ce cas qu'une partie seulement du courant qui arrive dans l'induit 1 circule dans l'inducteur, la différence passant par la résistance 7 (interrupteur 8 fermé) et par le thyristor 11 qui constitue avec la résistance éventuelle 13 une première voie de shuntage variable. Le blocage du thyristor 11 à chaque fin de période est assuré par le blocage du hacheur 5, la diode d'aiguillage 10 empêchant le retour du courant de la diode de roue libre 6 dans ledit thyristor 11.

Durant la phase d'accélération à puissance variable selon les caractéristiques propres du moteur, le hacheur 5, le thyristor 12 et la diode d'aiguillage 10 sont en état de conduction continue de telle sorte que les deux résistances 7 et 14 sont alors branchées en parallèle sur l'inducteur 2 assurant ainsi un taux de shuntage maximal d'inducteur.

La fermeture de la voie 11, 13 et l'ouverture de la seconde voie de shuntage 12, 14 sont obtenues en deux temps. Le thyristor 11 est d'abord bloqué par l'arrêt du hacheur 5, puis le thyristor 12 et le hacheur 5 sont simultanément réamorcés et restent ensuite à l'état de conduction continue.

Le mode de réalisation de la figure 2 est très voisin de celui de la figure 1, la différence résultant du fait que la résistance 14 est ici en parallèle sur le thyristor 11 et la résistance 13, les thyristors 12 et 11 étant en série.

Le fonctionnement de ce mode de réalisation est semblable à celui précédemment décrit, à ceci près que dans la phase de travail à puissance constante les deux thyristors 12 et 11 sont débloqués simultanément.

Le schéma de la figure 3 est identique à celui de la figure 1 à la seule différence près que la diode d'aiguillage 10 de la figure 1 est remplacée par un thyristor 10'. Dans cette disposition, le thyristor 10' est débloqué en synchronisme avec le hacheur 5 dans le cas général de fonctionnement. Le mode de fonctionnement reste le même que celui précédemment décrit mais le thyristor 10' en série avec le hacheur 5 permet à ce dernier d'avoir des angles d'ouverture très faibles grâce à l'effet connu du thyristor Vernier.

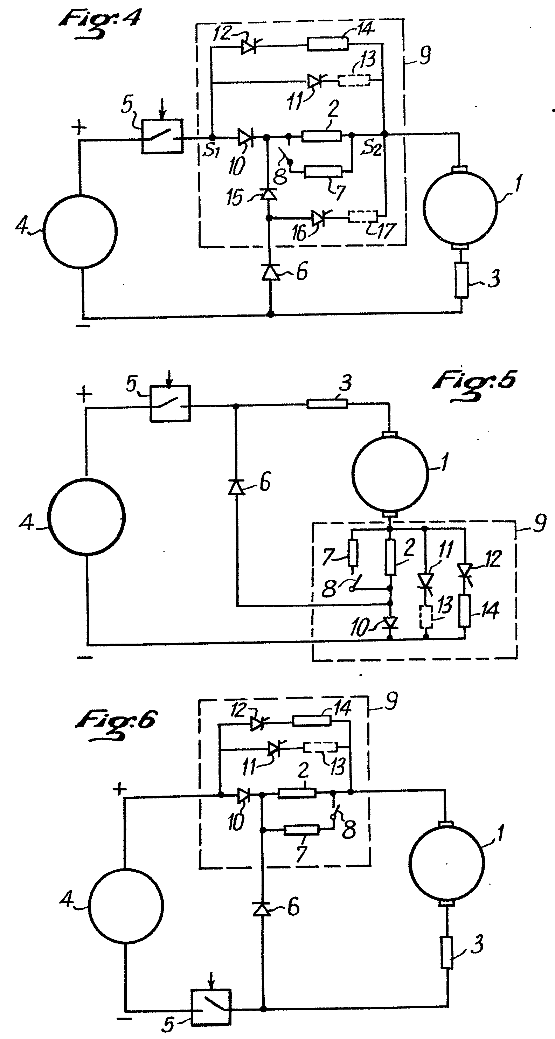

Le mode de réalisation montré à la figure 4 est muni des mêmes éléments que celui de la figure 1 mais possède une voie de shuntage supplémentaire.

Ce mode de réalisation comporte en effet en plus, une diode d'isolement 15 placée en série avec la diode de roue libre 6 et dont la cathode est reliée à l'entrée de l'inducteur 2, ainsi qu'un thyristor 16. Ce dernier est disposé de manière telle que sa cathode soit reliée avec la sortie de l'induction 2 (point S2), par l'intermédiaire éventuellement d'une résistance 17, tandis que son anode est reliée à l'anode et à la cathode des diodes respectivement d'isolement 15 et de roue libre 6.

Ce mode de réalisation (figure 4) fonctionne de manière analogue à celui de la figure 1 mais l'adjonction des éléments 15, 16 et éventuellement 17 permet d'obtenir un shuntage d'inducteur lorsque le hacheur 5 est à l'état bloqué en fonctionnement cyclique.

Les figures 1 à 4 montrent des dispositifs dans lesquels le hacheur 5 et le système de shuntage 9 sont disposés côte à côte du côté positif de la source 4 mais il est clair que le hacheur 5 et le système 9 peuvent être disposés autrement sans sortir du cadre de l'invention.

A titre d'exemples, les figures 5, 6 et 7 montrent des variantes du mode de réalisation de la figure 1 dans lesquelles le hacheur 5 et le système de shuntage 9 occupent des positions différentes.

La figure 5 montre un exemple dans lequel le hacheur reste du côté positif de la source tandis que le système 9 est placé du côté négatif.

La figure 6 montre au contraire un exemple dans lequel c'est le système 9 qui reste du côté positif tandis que le hacheur 5 est disposé du côté négatif.

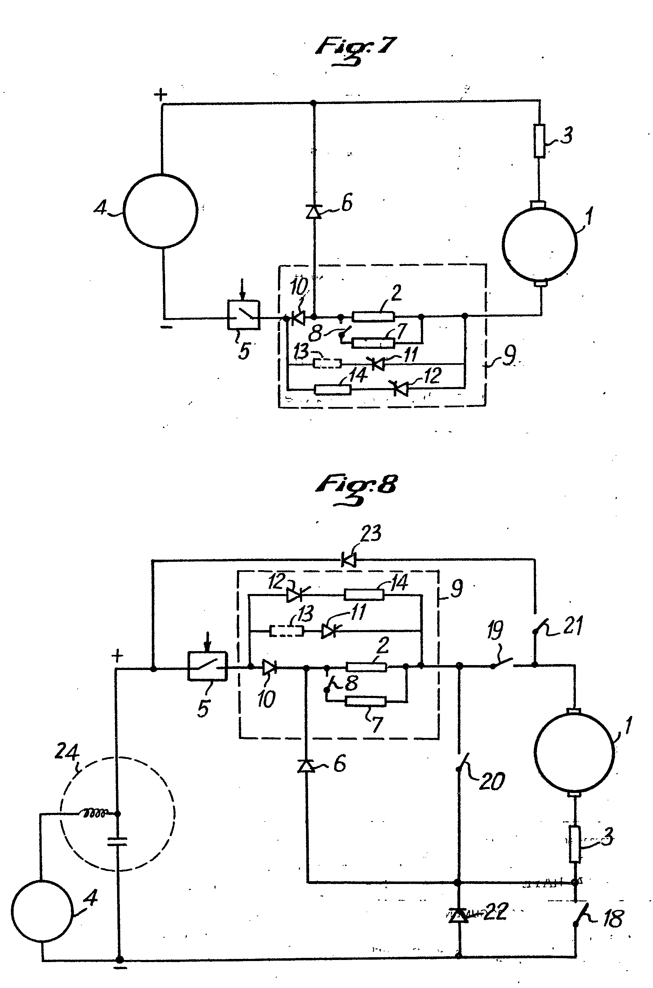

La figure 7 montre enfin un dispositif dans lequel le hacheur 5 et le système 9 sont disposés du côté négatif de la source 4.

Ceci montre bien que de nombreuses variantes peuvent être imaginées et il est en outre possible sans sortir du cadre de l'invention de combiner les divers modes de réalisation entre eux.

La figure 8 montre schématiquement une application possible, à la traction électrique, du dispositif selon l'invention. Ce schéma montre une disposition destinée à réaliser successivement une fonction traction et une fonction freinage électrique par récupération avec un hacheur fonctionnant en élévateur de tension.

La figure 8 montre les éléments 1 à 14 déjà décrits à propos des figures précédentes. La source de tension continue 4, dans cet exemple, est toutefois filtrée par une association classique self-condensateur 24. L'appareil montré présente en outre des contacteurs 18 et 19, placés de part et d'autre de l'induit 1 dans le circuit, qui sont fermés en fonction traction. Des contacteurs 20 et 21 sont également prévus pour être fermés en fonction freinage, tandis que des diodes 22 et 23 sont aménagées dans le circuit pour assurer la circulation du courant de freinage.

La diode 23 est montée en dérivation sur l'ensemble 5, 9 et peut être isolée par le contacteur 21. En agissant sur les contacteurs 18 à 21, il est donc facile d'établir les circuits traction et freinage.

L'exemple de la figure 8 n'est nullement limitatif. En outre, il est bien sûr possible de modifier sensiblement ce schéma en prévoyant par exemple des semi-conducteurs d'aiguillage à la place d'au moins certains des contacteurs 18, 19 et 21, sous forme de diodes et/ou de thyristors.

**Revendications**

1. Dispositif d'alimentation d'un moteur à courant continu à excitation série dont l'inducteur est muni d'un système de shuntage comportant une première voie de shuntage contrôlée par un thyristor commandé par un hacheur pour assurer le shuntage variable de l'inducteur pendant les phases de fonctionnement cyclique du hacheur, et muni éventuellement d'un shuntage résistif permanent, caractérisé en ce qu'il comporte une deuxième voie de shuntage contrôlée par thyristor assurant un taux maximal de shuntage lorsque le hacheur (5) passe à l'état de conduction continue, les deux voies de shuntage contrôlées assurant le passage du courant dans le même sens que dans l'inducteur.

2. Dispositif selon la revendication 1, caractérisé en ce que le système de shuntage (9) comporte un thyristor (11) en parallèle sur l'inducteur (2) et qui constitue la première voie de shuntage, et un autre thyristor (12) muni d'une résistance en série (14) qui sont montés en parallèle sur le thyristor (11) de la première voie et qui constituent la deuxième voie de shuntage de telle sorte que l'ouverture d'une voie et la fermeture de l'autre sont obtenues respectivement par l'amorçage et le blocage des thyristors correspondants.

3. Dispositif selon la revendication 1, caractérisé en ce que le système de shuntage (9) comporte un premier et un deuxième thyristors en série (12, 11) montés en parallèle sur l'inducteur (2) et une résistance (14) disposée en parallèle sur le deuxième thyristor (11), la première voie de shuntage étant constituée par le circuit des deux thyristors et la deuxième voie par le premier thyristor (12) et la résistance parallèle (14), de telle sorte que l'ouverture des voies est respectivement obtenue pour la première par le déblocage des deux thyristors et pour la deuxième par le blocage du deuxième thyristor (11) et le déblocage du premier thyristor (12).

4. Dispositif selon l'une des revendications 2 et 3, caractérisé en ce que le thyristor (11) de la première voie est muni d'une résistance d'ajustage (13) branchée en série avec lui.

5. Dispositif selon l'une des revendications 1 à 4, caractérisé en ce que le système de shuntage (9) comporte un semi-conducteur d'aiguillage disposé entre la sortie (S1) du hacheur (5) et l'entrée de l'inducteur (2) sous forme d'une diode (10).

6. Dispositif selon l'une des revendications 1 à 4, caractérisé en ce que le système de shuntage (9) comporte un semi-conducteur d'aiguillage disposé entre la sortie (S1) du hacheur (5) et l'entrée de l'inducteur (2) sous forme d'un thyristor (10').

7. Dispositif selon l'une des revendications 1 à 6, caractérisé en ce que le système de shuntage (9) comporte une troisième voie supplémentaire de shuntage de manière à permettre un shuntage de l'inducteur (2) pendant les phases de non conduction du hacheur (5) en fonctionnement cyclique.

8. Dispositif selon la revendication 7, caractérisé en ce que la troisième voie de shuntage comporte une diode d'isolement (15) qui est montée en série avec la diode (6) classique de roue libre et dont la cathode est branchée à l'entrée de l'inducteur (2) et par un thyristor (16) dont la cathode est reliée à la sortie (S2) de l'inducteur (2), par l'intermédiaire éventuellement d'une résistance (17), tandis que son anode est reliée à l'anode et à la cathode des diodes respectivement d'isolement (15) et de roue libre (6).

## Claims

1. A supply apparatus for a series-excited d.c. motor, the inductor of which is provided with a shunting system comprising a first shunting path controlled by a thyristor, which is controlled by a chopper so as to provide variable shunting for the inductor during the cyclical operation phases of the chopper, and optionally provided with a permanent shunting resistor, characterised in that it comprises a second thyristor controlled shunting path providing maximum shunting effect when the chopper (5) moves to the continuous conduction state, the two controlled shunting paths ensuring that the current flows in the same direction as in the inductor.

2. An apparatus according to claim 1, characterised in that the shunting system (9) comprises a thyristor (11) in parallel with the inductor (2) and which comprises the first shunting path, and another thyristor (12) with a resistor in series (14) which are in parallel with the thyristor (11) of the first path and which comprise the second shunting path so that the opening of one path and the closing of the other are correspondingly achieved by triggering and blocking the corresponding thyristors.

3. An apparatus according to claim 1, characterised in that the shunting system (9) comprises a first and second thyristor in series (12, 11) in parallel with the inductor (2) and a resistor (14) disposed parallel to the second thyristor (11), the first shunting path comprising the circuit of the two thyristors and the second comprising the first thyristor (12) and the parallel resistor (14) so that the opening of the paths is correspondingly obtained for the first path by unblocking the two thyristors (11) and for the second path by blocking the second thyristor (11) and unblocking the first thyristor (12).

4. An apparatus according to one of claims 2 and 3, characterised in that the thyristor (11) of the first path is provided with an adjustable resistor (13) connected in series to the thyristor.

5. An apparatus according to one of claims 1 to 4, characterised in that the shunting system (9) comprises a diverter disposed between the output (S1) of the chopper (5) and the inductor input (2) in the form of a diode (10).

6. An apparatus according to one of claims 1 to 4, characterised in that the shunting system (9) comprises a diverter disposed between the output (S1) of the chopper (5) and the inductor input (2), in the form of a thyristor (10').

7. An apparatus according to one of claims 1 to 6, characterised in that the shunting system (9) comprises a third shunting path, thus allowing shunting of inductor (2) during the non-conductive phases of the chopper (5) in cyclical operation.

8. An apparatus according to claim 7, characterised in that the third shunting path comprises an isolating diode (15) which is in series with the conventional free wheel diode (6) and the cathode of which is connected to the input of the inductor (2) by a thyristor (16) the cathode of which is connected to the output (S2) of the inductor (2), optionally by means of a resistor (17), whereas its anode is connected to the anode and to the cathode of the corresponding isolating diode (15) and free wheel diode (6).

## Ansprüche

1. Vorrichtung zur Versorgung eines Gleichstrommotors mit Reihenschlußerregung, bei dem einem Induktor (2) eine Nebenschlußschaltung (9) und ggf. ein permanenter Nebenschlußwiderstand (7) zugeordnet ist, wobei die Nebenschlußschaltung (9) einen ersten, von einem Thyristor gesteuerten Nebenschlußweg aufweist, der von einem Zerhacker (5) zur Sicherung eines variablen Nebenschlusses des Induktors (2) entsprechend den Phasen der zyklischen Funktion des Zerhackers (5) gesteuert wird, dadurch gekennzeichnet, daß die Nebenschlußschaltung (9) einen zweiten, von einem Thyristor gesteuerten Nebenschlußweg aufweist, zur Sicherung eines max. Nebenschlußverhältnisses sobald der Zerhacker (5) in den Dauerleitungszustand übergeht, und daß beide gesteuerten Nebenschlußwege einen Stromfluß in gleicher Richtung wie im Induktor (2) gewährleisten.

2. Vorrichtung nach Anspruch 1, dadurch gekennzeichnet, daß die Nebenschlußschaltung (9) einen den ersten Nebenschlußweg darstellenden, dem Induktor (2) parallel geschalteten Thyristor (11) aufweist, daß ein anderer Thyristor (12) mit einem Widerstand (14) in Reihe geschaltet ist, daß diese Reihenschaltung dem Thyristor (11) des ersten Nebenschlußweges parallel geschaltet ist und den zweiten Nebenschlußweg darstellt und daß das Öffnen des einen Nebenschlußweges und das Schließen des anderen Nebenschlußweges jeweils durch Zünden bzw. Löschen des entsprechenden Thyristors (11, 12) erzielbar ist.

3. Vorrichtung nach Anspruch 1, dadurch gekennzeichnet, daß die Nebenschlußschaltung (9) einen ersten Thyristor (12) und einen zweiten, in Reihe geschalteten Thyristor (11) aufweist, daß die Reihenschaltung dem Induktor (2) parallel geschaltet ist, daß dem zweiten Thyristor (11) ein Widerstand (14) parallel geschaltet ist, daß der erste Nebenschlußweg von dem Kreis der beiden Thyristoren (12, 11) und der zweite Nebenschlußweg vom ersten Thyristor (12) und dem parallelen Widerstand (14) gebildet ist und daß das Öffnen der Nebenschlußwege für den ersten Nebenschlußweg durch eine Entsperrung beider Thyristoren (12, 11) und für den zweiten Nebenschlußweg durch eine Sperrung des zweiten Thyristors (11) und eine Entsperrung des ersten Thyristors (12) erfolgt.

4. Vorrichtung nach Anspruch 2 oder 3, dadurch gekennzeichnet, daß dem Thyristor (11) im ersten Nebenschlußweg ein in Reihe geschalteter Einstellwiderstand (13) zugeordnet ist.

5. Vorrichtung nach einem der Ansprüche 1 bis 4, dadurch gekennzeichnet, daß die Nebenschlußschaltung (9) eine Halbleiterweiche aufweist, die zwischen den Ausgang (S1) des Zerhackers (5) und den Eingang des Induktors (2) geschaltet und als Diode (10) ausgebildet ist.

6. Vorrichtung nach einem der Ansprüche 1 bis 4, dadurch gekennzeichnet, daß die Nebenschlußschaltung (9) eine Halbleiterweiche aufweist, die zwischen den Ausgang (S1) des Erhackers (5) und den Eingang des Induktors (2) geschaltet und als Thyristor (10') ausgebildet ist.

7. Vorrichtung nach einem der Ansprüche 1 bis 6, dadurch gekennzeichnet, daß die Nebenschlußschaltung (9) einen dritten, hilfsweisen Nebenschlußweg aufweist und daß über diesen dritten Nebenschlußweg ein Nebenschluß des Induktors (2) während des Nichtleitens des Zerhackers im Verlaufe der zyklischen Funktion herstellbar ist.

8. Vorrichtung nach Anspruch 7, dadurch gekennzeichnet, daß der dritte Nebenschlußweg eine Entkopplungsdiode (16) in Reihenschaltung zu einer üblichen Freilaufdiode (6) aufweist, deren Kathode an den Eingang des Induktors (2) angeschlossen ist, daß ferner ein Thyristor (16) vorgesehen und mit seiner Kathode, ggf. über einen Widerstand (17) an den Ausgang (S2) des Induktors (2) angeschlossen ist und daß der Thyristor (16) mit seiner Anode an die Anode der Entkopplungsdiode (15) bzw. die Kathode der Freilaufdiode (6) angeschlossen ist.

0 070 785

Fig. 1

Fig. 2

Fig. 3

0 070 785

Fig. 4

Fig. 5

Fig. 6

Fig. 7

Fig. 8

0 070 785

3